# EUROPEAN PATENT SPECIFICATION

(11) **EP 3 381 764 B1**
(45) Date of publication and mention of the grant of the patent: **28.04.2021**
(21) Application number: 17163873.7
(22) Date of filing: 30.03.2017
(51) Int. Cl.: B61L 15/00, B64D 43/00, G01C 21/00, G06F 1/16

(54) **A DISPLAYING DEVICE**
ANZEIGEVORRICHTUNG
AFFICHEUR

(43) Date of publication of application: 03.10.2018
(73) Proprietor: Bombardier Transportation GmbH, 10785 Berlin (DE)
(72) Inventor: Westberg, Bengt, SE-120 63 Stockholm (SE); Elf, Magnus, SE-178 52 Ekerö (SE)
(74) Representative: Bjerkéns Patentbyrå KB (Gävle)

(56) References cited:
- EP-A1- 0 971 283
- EP-A1- 2 163 451
- JP-A- H09 330 149
- JP-A- H10 171 382
- US-A1- 2017 083 048
- US-B1- 7 061 472
- US-B1- 8 831 687

## Description

The present invention relates to a device for displaying information of importance for driving a vehicle to a driver inside a driver's cabin of the vehicle according to the preamble of appended claim 1.

The invention is particularly directed to such devices for displaying information to a driver of a heavy transport vehicle, such as a rail vehicle (train), and especially where there is limited space available for arranging such a device.

The invention will hereinafter be discussed for such a device to be arranged in the driver's cabin of a rail vehicle so as to illuminate the invention and the problems to be solved thereby without restricting the invention to that application. Rail vehicles need a speed indicator so that the driver can compare the speed allowed with the current speed. Rail vehicles may also have an Automatic Train Protection system (ATP), such as the European Rail Traffic Management System (ERTMS), which is an automatic supervising system handling data of importance for the traffic on a railway section on which the rail vehicle is travelling, and this system comprises a said device with a display unit in the form of a Driver's Machine Interface (DMI) arranged in the driver's cabin for displaying important information to the driver, such as current maximum allowed speed and maximum allowed speed in a very near future. If the computer of the ATP system of the rail vehicle detects that the driver is speeding, i.e. is driving faster than allowed, the DMI alerts the driver and the driver has to acknowledge the warning and engage the brake. The DMI is also used for configuration purposes at the beginning of a trip when different data are fed into the computer of the ATP system, such as the number and types of wagons of the train to which the rail vehicle belongs and at which position of the railway track braking has to start at a given speed of the train as some example of such data. The speed indicator is included in the ATP system's DMI or the DMI is not part of an ATP but only display essential information like the speed. In a new rail vehicle there is usually a space reserved in the driver's cabin for the DMI. However, in old rail vehicles there is usually no such space reserved. Furthermore, there is very limited space available on the driver's panel. If the DMI goes down, it will directly affect the availability of the ATP system and the rail vehicle's ATP has then to engage the brake so that the rail vehicle will come to standstill, since information of vital importance for driving the vehicle is no longer made available to the driver by the lack of a DMI functioning properly.

A device suitable for displaying information of importance for driving a vehicle to a driver thereof of the type defined in the introduction is known through JP H10 171382 A.

Although that device is not expressively intended for use in vehicles.

This known display arrangement comprises two separate display units with a screen each joined to form a display member with two screens on opposite sides thereof. The device further comprises a frame configured to be attached to a carrier inside a driver's cabin of the vehicle and provided with on one hand mechanical members configured to interact with mechanical members of the displaying member for removable attachment of the display member to and within the frame with in use a screen of one of said display units facing the space of the driver's cabin and on the other hand with electrical connecting members for interacting with electrical connecting members of the display member for electrical connection of the display unit with in use screen facing said space when the display member is attached to and received in the frame.

### SUMMARY OF THE INVENTION

The object of the invention is to provide a device for displaying information of importance for driving a vehicle to a driver being improved with respect to such devices already known This object is according to the invention obtained by providing a device with the features of claim 1.

The device according to the invention provides two display units without requiring more panel area than for one such display unit. Accordingly, redundancy is obtained without any demand of extra panel area. Would the display unit in use, i.e. the one arranged in the frame with the screen directed towards the driver, go down, the display member will be removed from the frame and turned and attached to the frame again with the other display unit with the screen facing the space of the driver's cabin enabling continued driving of the vehicle, since the information of importance for driving the vehicle will still be presented to the driver. When the vehicle is taken out of traffic next time, the entire display member may be exchanged by one functioning properly or just the defect display unit may be replaced or repaired.

Thus, redundancy is obtained without compromising with the size of the display unit and the screen thereof, which is of great advantage since such display units have normally a standardized size to which the drivers of the type of vehicles provided with such a displaying device are used and feel comfortable to handle.

According to the invention each display unit is a so called Driver's Machine Interface (DMI) configured to display important information to the driver of a heavy transport vehicle, such as a train, so as to obtain redundancy of the operation of the DMI for such a vehicle. This constitutes a great advantage since the space available in the driver's panel of such vehicles is limited at the same time as redundancy of such a display unit constitutes a major improvement owing to the high demand of reliability and of safe operation of such vehicles. "Heavy" as used here includes all types of public and other transport vehicles, but excludes private cars.

According to another embodiment of the invention the frame has a shape configured to fit into a cavity in the driver's panel of said vehicle and is provided with members for securing the frame in said cavity.

According to another embodiment of the invention the device is configured to be arranged in the driver's cabin of a rail vehicle, which constitutes an advantageous application of the present invention.

According to another embodiment of the invention the DMI having in use the screen facing the space of the driver's cabin when the display member is attached to the frame is configured to form a component of an Automatic Train Protection system (ATP) for automatic supervising the operation of the rail vehicle, such as the European Rail Traffic Management System (ERTMS).

According to another embodiment of the invention the electrical connecting members of the display unit with in use the screen facing the space of the driver's cabin are configured to automatically establish electrical connection to corresponding electrical connecting members of said frame upon attachment of the display member to the frame. This facilitates the replacement of a defect display unit by a display unit of the display member still in good order.

According to another embodiment of the invention said mechanical members of the display member and the frame are designed to obtain attachment of the display member to the frame by a snap-locking action. This way of obtaining attachment of the display member to the frame enables smooth switching of the display unit to be used to display information to the driver when needed.

According to another embodiment of the invention the mechanical members of the display member and the frame are male members entering into engagement with female members so as to obtain said attachment.

According to another embodiment of the invention said mechanical members of the frame are arranged at frame parts configured to form an upper and a lower frame part extending substantially horizontally when the frame is attached to a carrier inside a said driver's cabin. Such positioning of the mechanical members provides for an easy attaching of the display member to the frame and releasing it therefrom by the driver.

According to another embodiment of the invention the display member is configured to be released from the frame by bringing said mechanical members at the upper part of the frame out of engagement with mechanical members on the display member and then tilting the display member out from the frame about an axis extending along said lower frame part. These features enable a very smooth removal of the display member from the frame and reattachment thereof to the frame.

According to another embodiment of the invention the electrical connecting members of the frame are configured to only establish electrical connection with the display unit having in use the screen thereof facing the space of the driver's cabin when the display member is attached to the frame. This is preferred, since it would make no sense to have the display unit with the screen turned away from the driver connected to the electrical system of the vehicle.

According to another embodiment of the invention the display units and the screens thereof have a substantially rectangular shape. The device may also according to another embodiment of the invention have the frame provided with at least one loudspeaker.

According to another embodiment of the invention the two display units of the display member are separably secured to each other, which will then make it possible to remove a defect display unit from the display member and replace it by one functioning accurately.

The invention also relates to a use of a device according to the invention for displaying information to a driver inside a driver's cabin of a rail vehicle.

Further advantages as well as advantageous features of the invention will appear from the description following below.

### BRIEF DESCRIPTION OF THE DRAWINGS

With reference to the appended drawings, below follows a specific description of an embodiment of the invention cited as an example.

In the drawings:
- Fig. 1: is a schematic view of a driver's cabin of a rail vehicle provided with a device according to an embodiment of the present invention,
- Fig. 2: is a front view of the device according to the invention,
- Fig. 3: is a perspective view of the device shown in Fig. 2 showing how the display member thereof is tilted out of the frame for being lifted out thereof and turned in the case of a malfunction of the display unit used so far,
- Fig. 4: is an exploded view showing the device according to Fig. 2 with the display member removed from the frame, and
- Fig. 5: illustrates how the display member turned is introduced into the frame again.

### DETAILED DESCRIPTION OF AN EMBODIMENT OF THE INVENTION

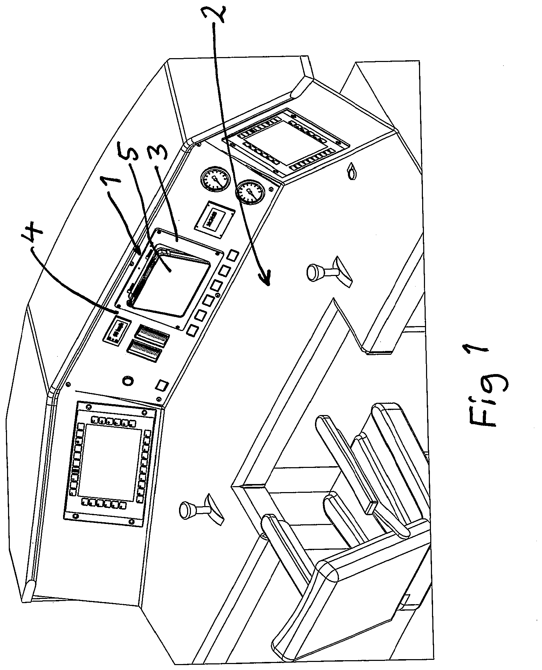

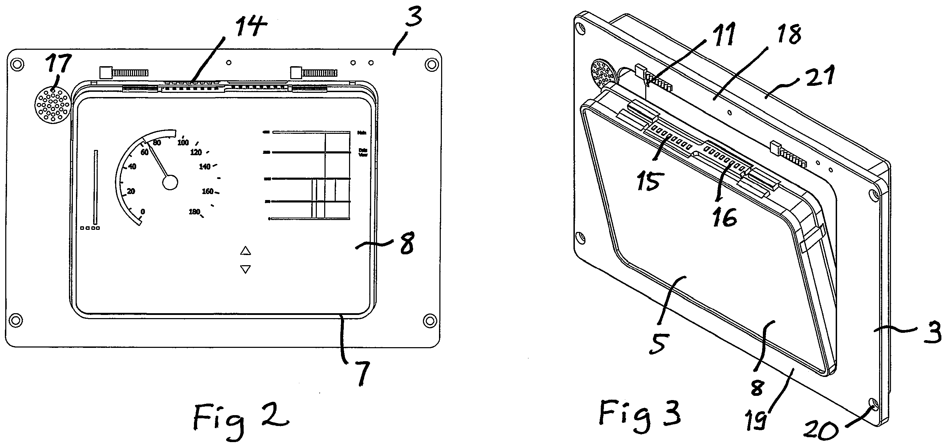

It is illustrated in Fig. 1 how a device 1 for displaying information of importance for driving a rail vehicle to the driver of the vehicle is arranged inside a driver's cabin 2 of the vehicle by having a frame 3 thereof secured in a cavity of the driver's panel 4 of the vehicle. The frame has for this sake dimensions of a rear part 21 - see Fig. 3 - corresponding to the dimensions of such a cavity and bores 20 for securing it by suitable means to said driver's panel. The device 1 has a display arrangement with a display member 5 removably attached to the frame 3, and the design and function of the device will now be described while making reference to Figs. 2-5.

The display member 5 comprises two separate display units 6, 7 with a screen, 8, 9 each configured to display information of importance for driving the vehicle. The two display units are joined to form a display member 5 with the two screens 8, 9 on opposite sides thereof. "Separate" does here mean that the two display units do not share any components influencing the operation of the units.

The frame 3 is provided with on one hand mechanical members 10, 11 configured to interact with mechanical members 12, 13 of the display member 5 for removable attachment of the display member to and within the frame with a screen of an optional of the display units facing the space of the driver's cabin and on the other hand with electrical connecting members 14 for interacting with electrical connecting members 15, 16 of the display member for electrical connection of the display unit with the screen facing the space of the driver's cabin when the display member is attached to and received in the frame as shown in Fig. 2. The frame is also provided with a loudspeaker 17.

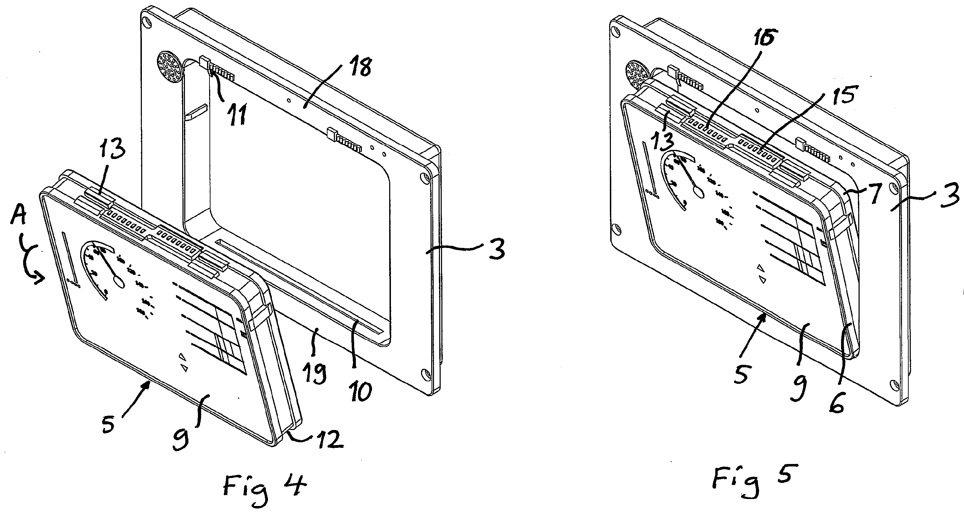

It is shown in Fig. 2 how the screen 8 of the display unit 7 is displaying information of importance for driving the vehicle to the driver, such as relating to the speed of the vehicle. We do now assume that the display unit 7 goes down, which is illustrated in Fig. 3 through an empty screen 8. The mechanical member 13 of the display member and those 11 of the frame arranged in an upper frame part 18 are designed to obtain attachment of the display member to the frame by a snap-locking action, and these members are disengaged allowing tilting of the display member 5 out of the frame 3 about an axis extending along a lower frame part 19 as illustrated in Fig. 3. The display member may then be lifted out of the frame and turned as illustrated by the arrow A in Fig. 4 for being introduced with the mechanical members 12 at the bottom thereof into engagement with the mechanical members 10 in the lower frame part with the display unit 6 with the screen 9 thereof facing the driver's cabin and then tilted from the position shown in Fig. 5 to the position shown in Fig. 2 for use of the display unit functioning accurately after engagement of the mechanical members 13 of the display member with the mechanical members 11 of the frame and snap-locking the display member to the frame while then automatically bringing the electrical connecting members of the display unit 6 in electrical connection with the electrical connecting members of the frame connected to the electric system of the vehicle. The screen 9 of the display unit 6 is in the reality of course "empty" in the positions of the display member 5 shown in Figs. 4 and 5, since it does not have the electrical connecting members 16 thereof connected to the electrical connecting members 14 of the frame and the vehicle speed and other indications are only shown on the screen 9 for explaining that this display unit 6 is in good order.

The invention is of course in no way restricted to the embodiment described above, since many possibilities for modifications thereof are likely to be obvious to one skilled in the art without having to deviate from the scope of invention defined in the appended claims.

## Claims

1. A device for displaying information of importance for driving a vehicle to a driver inside a driver's cabin (2) of the vehicle, the device comprising a display arrangement with a display unit having a screen configured to display said information, said display arrangement comprising two separate said display units (6, 7) with a screen (8, 9) each joined to form a display member (5) with two screens on opposite sides thereof, the device further comprising a frame (3) configured to be attached to a carrier (4) inside a said driver's cabin and provided with on one hand mechanical members (10, 11) configured to interact with mechanical members (12, 13) of the display member (5) for removable attachment of the display member (5) to and within the frame (3) with in use the screen (8, 9) of one of said display units (6, 7) facing the space of the driver's cabin and on the other hand with electrical connecting members (14) for interacting with electrical connecting members (15, 16) of the display member (5) for electrical connection of the display unit (6, 7) with in use the screen facing the space of the driver's cabin when the display member (5) is attached to and received in said frame (3), **characterized in that** each display unit (6, 7) is a so called Driver's Machine Interface (DMI) configured to display important information to the driver of a heavy transport vehicle, such as a train, so as to obtain redundancy of the operation of the DMI for such a vehicle.

2. A device according to claim 1, **characterized in that** the frame (3) has a shape configured to fit into a cavity in the driver's panel (4) of a said vehicle and is provided with members (20) for securing the frame in said cavity.

3. A device according to claim 1 or 2, **characterized in that** the device is configured to be arranged in the driver's cabin (2) of a rail vehicle.

4. A device according to claim 3, **characterized in that** the DMI (6, 7) having in use the screen facing the space of the driver's cabin when the display member is attached to the frame is configured to form a component of an Automatic Train Protection system (ATP) for automatic supervising the operation of the rail vehicle, such as the European Rail Traffic Management System (ERTMS).

5. A device according to any of the preceding claims, **characterized in that** the electrical connecting members (15, 16) of the display unit (6, 7) with in use the screen facing the space of the driver's cabin are configured to automatically establish electrical connection to corresponding electrical connecting members (14) of said frame (3) upon attachment of the display member (5) to the frame.

6. A device according to any of the preceding claims, **characterized in that** said mechanical members (11, 13) of the display member and the frame are designed to obtain attachment of the display member (5) to the frame (3) by a snap-locking action.

7. A device according to claim 6, **characterized in that** said mechanical members (10, 11, 12, 13) of the display member (5) and the frame (3) are male members entering into engagement with female members so as to obtain said attachment.

8. A device according to any of the preceding claims, **characterized in that** said mechanical members (10, 11) of the frame (3) are arranged at frame parts configured to form an upper (18) and a lower (19) frame part extending substantially horizontally when the frame is attached to a carrier inside a said driver's cabin.

9. A device according to claims 6 and 8, **characterized in that** the display member (5) is configured to be released from the frame (3) by bringing said mechanical members (11) at the upper part (18) of the frame out of engagement with mechanical members (13) on the display member (5) and then tilting the display member out from the frame about an axis extending along said lower frame part (19).

10. A device according to any of the preceding claims, **characterized in that** the electrical connecting members (14) of the frame (3) are configured to only establish electrical connection with the display unit (6, 7) having in use the screen thereof facing the space of the driver's cabin when the display member (5) is attached to the frame (3).

11. A device according to any of the preceding claims, **characterized in that** said display units (6, 7) and the screens (8, 9) thereof have a substantially rectangular shape.

12. A device according to any of the preceding claims, **characterized in that** said frame (3) is provided with at least one loudspeaker (17).

13. A device according to any of the preceding claims, **characterized in that** the two display units (6, 7) of the display member (5) are separably secured to each other.

14. Use of a device according to any of the preceding claims for displaying information to a driver inside a driver's cabin of a rail vehicle.

## Patentansprüche

1. Vorrichtung, um Informationen, die für das Fahren eines Fahrzeugs von Bedeutung sind, einem Fahrer in einer Fahrerkabine (2) des Fahrzeugs anzuzeigen, wobei die Vorrichtung eine Anzeigeanordnung mit einer Anzeigeeinheit mit einem Bildschirm aufweist, der dazu konfiguriert ist, die Informationen anzuzeigen, wobei die Anzeigeanordnung zwei getrennte Anzeigeeinheiten (6, 7) mit jeweils einem Bildschirm (8, 9) umfasst, die verbunden sind, um ein Anzeigeelement (5) mit zwei Bildschirmen auf gegenüberliegenden Seiten davon zu bilden, wobei die Vorrichtung ferner einen Rahmen (3) umfasst, der dazu konfiguriert ist, an einem Träger (4) in der Fahrerkabine angebracht zu werden, und einerseits mit mechanischen Elementen (10, 11) versehen ist, die dazu konfiguriert sind, mit mechanischen Elementen (12, 13) des Anzeigeelements (5) zur entfernbaren Befestigung des Anzeigeelements (5)an und innerhalb des Rahmens (3) zu interagieren, wobei der Bildschirm (8, 9) einer der Anzeigeeinheiten (6, 7) im Gebrauch dem Raum der Fahrerkabine zugewandt ist, und andererseits mit elektrischen Verbindungselementen (14) zur Wechselwirkung mit elektrischen Verbindungselementen (15, 16) des Anzeigeelements (5) zum elektrischen Verbinden der Anzeigeeinheit, wobei der Bildschirm im Gebrauch dem Raum der der Fahrerkabine zugewandt ist, wenn das Anzeigeelement (5) an dem Rahmen (3) angebracht ist und in diesem aufgenommen ist, **dadurch gekennzeichnet, dass** jede Anzeigeeinheit (6, 7) ein sogenanntes Driver's Machine Interface (DMI) ist, das dazu konfiguriert ist, um dem Fahrer eines schweren Transportfahrzeugs, wie eines Zuges, wichtige Informationen anzuzeigen, um eine Redundanz des Betriebs des DMI für ein solches Fahrzeug zu erhalten.

2. Vorrichtung nach Anspruch 1, **dadurch gekennzeichnet, dass** der Rahmen (3) eine Form aufweist, die dazu konfiguriert ist, in einen Hohlraum in des Fahrerarmaturenbretts (4) eines Fahrzeugs zu passen, und mit Elementen (20) zum Sichern des Rahmens in dem Hohlraum versehen ist.

3. Vorrichtung nach Anspruch 1 oder 2, **dadurch gekennzeichnet, dass** die Vorrichtung dazu konfiguriert ist, in der Fahrerkabine (2) eines Schienenfahrzeugs angeordnet zu werden.

4. Vorrichtung nach Anspruch 3, **dadurch gekennzeichnet, dass** das DMI (6, 7), dessen Bildschirm im Gebrauch dem Raum der Fahrerkabine zugewandt ist, wenn das Anzeigeelement an dem Rahmen angebracht ist, dazu konfiguriert ist, eine Komponente eines automatischen Zugschutzsystems (ATP) zur automatischen Überwachung des Betriebs des Schienenfahrzeugs, wie beispielsweise des Europäischen Schienenverkehrsmanagementsystems (ERTMS), zu bilden.

5. Vorrichtung nach einem der vorhergehenden Ansprüche, **dadurch gekennzeichnet, dass** die elektrischen Verbindungselemente (15, 16) der Anzeigeeinheit (6, 7) im Gebrauch mit in Richtung des Raums der Fahrerkabine weisendem Bildschirm dazu konfiguriert sind, automatisch eine elektrische Verbindung zu den entsprechenden elektrischen Verbindungselementen (14) des Rahmens (3) beim Anbringen des Anzeigeelements (5) an dem Rahmen herzustellen.

6. Vorrichtung nach einem der vorhergehenden Ansprüche, **dadurch gekennzeichnet, dass** die mechanischen Elemente (11, 13) des Anzeigeelements und des Rahmens so gestaltet sind, dass sie eine Befestigung des Anzeigeelements (5) an dem Rahmen (3) durch einen Schnappverschlussaktion erzielen.

7. Vorrichtung nach Anspruch 6, **dadurch gekennzeichnet, dass** die mechanischen Elemente (10, 11, 12, 13) des Anzeigeelements (5) und des Rahmens (3) männliche Elemente sind, die mit weiblichen Elementen in Eingriff treten, um die Befestigung zu erzielen.

8. Vorrichtung nach einem der vorhergehenden Ansprüche, **dadurch gekennzeichnet, dass** die mechanischen Elemente (10, 11) des Rahmens (3) an Rahmenteilen angeordnet sind, die dazu konfiguriert sind, einen oberen (18) und einen unteren (19) Rahmenteil zu bilden, die sich im wesentlichen horizontal erstrecken, wenn der Rahmen an einem Träger in der Fahrerkabine befestigt ist.

9. Vorrichtung nach den Ansprüchen 6 und 8, **dadurch gekennzeichnet, dass** das Anzeigeelement (5) dazu konfiguriert ist, vom Rahmen (3) gelöst zu werden, indem die mechanischen Elemente (11) am oberen Teil (18) des Rahmens mit mechanischen Elementen (13) an dem Anzeigeelement (5) außer Eingriff gebracht werden und dann das Anzeigeelement aus dem Rahmen um eine Achse gekippt wird, die sich entlang des unteren Rahmenteils (19) erstreckt.

10. Vorrichtung nach einem der vorhergehenden Ansprüche, **dadurch gekennzeichnet, dass** die elektrischen Verbindungselemente (14) des Rahmens (3) dazu konfiguriert sind, dass sie nur eine elektrische Verbindung mit der Anzeigeeinheit (6, 7) herstellen, deren Bildschirm im Gebrauch dem Raum der Fahrerkabine zugewandt ist, wenn das Anzeigeelement (5) am Rahmen (3) befestigt ist.

11. Vorrichtung nach einem der vorhergehenden Ansprüche, **dadurch gekennzeichnet, dass** die Anzeigeeinheiten (6, 7) und deren Bildschirme (8, 9) eine im Wesentlichen rechteckige Form aufweisen.

12. Vorrichtung nach einem der vorhergehenden Ansprüche, **dadurch gekennzeichnet, dass** der Rahmen (3) mit mindestens einem Lautsprecher (17) versehen ist.

13. Vorrichtung nach einem der vorhergehenden Ansprüche, **dadurch gekennzeichnet, dass** die beiden Anzeigeeinheiten (6, 7) des Anzeigeelements (5) trennbar aneinander befestigt sind.

14. Verwendung einer Vorrichtung gemäß einem der vorhergehenden Ansprüche zum Anzeigen von Informationen für einen Fahrer in einer Fahrerkabine eines Schienenfahrzeugs.

## Revendications

1. Dispositif pour afficher des informations d'importance pour la conduite d'un véhicule à un conducteur à l'intérieur d'une cabine de conducteur (2) du véhicule, le dispositif comprenant un agencement d'affichage avec une unité d'affichage ayant un écran configuré pour afficher lesdites informations, ledit agencement d'affichage comprenant deux dites unités d'affichage (6, 7) distinctes avec un écran (8, 9), chacune étant jointe pour former un organe d'affichage (5) avec deux écrans sur des côtés opposés de celui-ci, le dispositif comprenant en outre un cadre (3) configuré pour être fixé à un support (4) à l'intérieur d'une dite cabine de conducteur et pourvu, d'une part, d'organes mécaniques (10, 11) configurés pour interagir avec des organes mécaniques (12, 13) de l'organe d'affichage (5) pour une fixation amovible de l'organe d'affichage (5) au cadre (3) et à l'intérieur de celui-ci avec, en utilisation, l'écran (8, 9) de l'une desdites unités d'affichage (6, 7) faisant face à l'espace de la cabine de conducteur et, d'autre part, avec des organes de raccordement électrique (14) pour interagir avec des organes de raccordement électrique (15, 16) de l'organe d'affichage (5) pour un raccordement électrique de l'unité d'affichage (6, 7) avec, en utilisation, l'écran faisant face à l'espace de la cabine de conducteur lorsque l'organe d'affichage (5) est fixé audit cadre (3) et reçu à l'intérieur de celui-ci, **caractérisé en ce que** chaque unité d'affichage (6, 7) est ce que l'on appelle une interface conducteur-machine (DMI) configurée pour afficher des informations importantes au conducteur d'un véhicule de transport lourd, comme un train, de manière à obtenir une redondance du fonctionnement de la DMI pour un tel véhicule.

2. Dispositif selon la revendication 1, **caractérisé en ce que** le cadre (3) a une forme configurée pour s'ajuster dans une cavité dans le panneau de conducteur (4) d'un dit véhicule et est pourvu d'organes (20) pour fixer le cadre dans ladite cavité.

3. Dispositif selon la revendication 1 ou 2, **caractérisé en ce que** le dispositif est configuré pour être agencé dans la cabine de conducteur (2) d'un véhicule ferroviaire.

4. Dispositif selon la revendication 3, **caractérisé en ce que** la DMI (6, 7) ayant, en utilisation, l'écran faisant face à l'espace de la cabine de conducteur lorsque l'organe d'affichage est fixé au cadre est configurée pour former un composant d'un système de protection de train automatique (ATP) pour une supervision automatique du fonctionnement du véhicule ferroviaire, comme le système européen de gestion de trafic ferroviaire (ERTMS).

5. Dispositif selon l'une quelconque des revendications précédentes, **caractérisé en ce que** les organes de raccordement électrique (15, 16) de l'unité d'affichage (6, 7) avec, en utilisation, l'écran faisant face à l'espace de la cabine de conducteur sont configurés pour établir automatiquement un raccordement électrique à des organes de raccordement électrique (14) correspondants dudit cadre (3) à la fixation de l'organe d'affichage (5) au cadre.

6. Dispositif selon l'une quelconque des revendications précédentes, **caractérisé en ce que** lesdits organes mécaniques (11, 13) de l'organe d'affichage et du cadre sont conçus pour obtenir une fixation de l'organe d'affichage (5) au cadre (3) par une action d'encliquetage.

7. Dispositif selon la revendication 6, **caractérisé en ce que** lesdits organes mécaniques (10, 11, 12, 13) de l'organe d'affichage (5) et du cadre (3) sont des organes mâles se mettant en prise avec des organes femelles de manière à obtenir ladite fixation.

8. Dispositif selon l'une quelconque des revendications précédentes, **caractérisé en ce que** lesdits organes mécaniques (10, 11) du cadre (3) sont agencés à des parties de cadre configurées pour former des parties de cadre supérieure (18) et inférieure (19) s'étendant sensiblement horizontalement lorsque le cadre est fixé à un support à l'intérieur d'une dite cabine de conducteur.

9. Dispositif selon les revendications 6 et 8, **caractérisé en ce que** l'organe d'affichage (5) est configuré pour être libéré du cadre (3) en mettant lesdits organes mécaniques (11) à la partie supérieure (18) du cadre hors prise des organes mécaniques (13) sur l'organe d'affichage (5) puis en inclinant l'organe d'affichage hors du cadre autour d'un axe s'étendant le long de ladite partie de cadre inférieure (19).

10. Dispositif selon l'une quelconque des revendications précédentes, **caractérisé en ce que** les organes de raccordement électrique (14) du cadre (3) sont configurés pour établir un raccordement électrique avec l'unité d'affichage (6, 7) ayant, en utilisation, l'écran de celle-ci faisant face à l'espace de la cabine de conducteur uniquement lorsque l'organe d'affichage (5) est fixé au cadre (3).

11. Dispositif selon l'une quelconque des revendications précédentes, **caractérisé en ce que** lesdites unités d'affichage (6, 7) et les écrans (8, 9) de celles-ci ont une forme sensiblement rectangulaire.

12. Dispositif selon l'une quelconque des revendications précédentes, **caractérisé en ce que** ledit cadre (3) est pourvu d'au moins un haut-parleur (17).

13. Dispositif selon l'une quelconque des revendications précédentes, **caractérisé en ce que** les deux unités d'affichage (6, 7) de l'organe d'affichage (5) sont fixées l'une à l'autre de manière à pouvoir être séparées.

14. Utilisation d'un dispositif selon l'une quelconque des revendications précédentes pour afficher des informations à un conducteur à l'intérieur d'une cabine de conducteur d'un véhicule ferroviaire.
